# EUROPÄISCHE PATENTSCHRIFT

(11) **EP 4 017 712 B1**
(45) Veröffentlichungstag und Bekanntmachung des Hinweises auf die Patenterteilung: **27.09.2023**
(21) Anmeldenummer: 20760412.5
(22) Anmeldetag: 18.08.2020
(51) Int. Cl.: B29C 70/44, B29C 70/46, B29C 35/04

(54) **VERFAHREN ZUM HERSTELLEN EINES BAUTEILS AUS EINEM FASERVERBUNDWERKSTOFF**
METHOD FOR PRODUCING A COMPONENT FROM A FIBRE-COMPOSITE MATERIAL
PROCÉDÉ POUR FABRIQUER UNE PIÈCE EN MATÉRIAU COMPOSITE RENFORCÉ PAR DES FIBRES

(30) Priorität: 22.08.2019 DE 102019005913
(43) Veröffentlichungstag der Anmeldung: 29.06.2022
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE); SCHÜRMANN, Klaus, 41363 Jüchen (DE); SEBASTIAN, Lothar, 47239 Duisburg (DE)
(74) Vertreter: Michalski Hüttermann & Partner Patentanwälte mbB
(86) Internationale Anmeldenummer: PCT/EP2020/073054
(87) Internationale Veröffentlichungsnummer: WO 2021/032710

(56) Entgegenhaltungen:
- WO-A2-2010/118923
- DE-A1-102017 113 595
- US-A1- 2006 233 907

## Beschreibung

### Technisches Gebiet

Die Erfindung betrifft ein Verfahren zum Herstellen eines Bauteils aus einem Faserverbundwerkstoff mit dem Schritt Einbringen einer mit einer Matrix imprägnierten Faser auf eine Innenform eines zwischen der Innenform und einer Außenform gebildeten Formraums.

### Hintergrund der Erfindung

Zu Faserverbundwerkstoffen gehörende Organobleche sind aus dem Stand der Technik bekannt und werden vor allem im Flugzeug-, Schiffs- und Automobilbau verwendet, um gegenüber herkömmlichen Materialien bei vergleichbarer oder sogar besserer Steifigkeit wesentlich leichtere Bauteile zu erhalten. Derartige Organobleche weisen in der Regel ein Fasergewebe oder ein Fasergelege auf, welches in eine thermoplastische Kunststoffmatrix eingebettet ist, und liegen oftmals als Faser-Matrix-Halbzeuge Glas, Aramid oder Kohlenstoff als Faserwerkstoff. Da sich Organobleche in einfacher Weise mittels bekannter Methoden der Metallverarbeitung warm umformen lassen, resultieren im Vergleich zu konventionellen duroplastischen Faserverbundwerkstoffen kürzere Prozesszeiten.

In der Regel werden solche Organobleche im Bereich des Flugzeug-, Schiffs-, oder Fahrzeugbaus verwendet, um Bauteile aus Faserverbundwerkstoff einzeln vorzufertigen und in einer anschließenden Endmontage zusammenzusetzen. Die Bauteile werden somit in der Regel mittels einer Innenform und einer Außenform in einer Presse umgeformt, wobei der Formraum zwischen der Innenform und der Außenform dem zu formenden Bauteil entspricht.

Beim Herstellen der Bauteile durch Pressen kann es aufgrund kleinster Unebenheiten sowie einer nicht vollkommenen Kongruenz der verwendeten Innenform zu der verwendeten Außenform zu unterschiedlichen Druckverteilungen des Pressdrucks auf das Bauteil kommen. In Bereichen, in denen während der Herstellung ein geringerer Pressdruck vorhanden war, weist das fertige Bauteil nicht selten eine niedrigere Stabilität auf, da durch den geringeren Druck das Material weniger innere Verbindungen, die auch als Brücken bezeichnet werden, formen konnte. Insbesondere bei komplex geformten Bauteilen, also Bauteile, die beispielsweise mehrfach gekrümmt sind, akzentuiert sich das beschriebene Problem, da bei komplex geformten Außen- und Innenformen aufgrund der geringeren Fertigungsungenauigkeiten beim Herstellen der Innen- und Außenform die Unebenheiten zunehmen und die Kongruenz zwischen Innen- und Außenform abnimmt.

Das Dokument DE 10 2017 113 595 A1 betrifft ein Verfahren zum Herstellen eines Bauteils aus einem Faserverbundwerkstoff mit dem Schritt Einbringen einer mit einer Matrix imprägnierten Faser auf eine zylinderartige Innenform eines zwischen der Innenform und einer zylinderartigen Außenform gebildeten Formraums. Dabei wird eine Kavität mit einem Thermoöl mit einer Temperatur größer dem Schmelzpunkt der Matrix und mit einem Druck größer Umgebungsdruck derart beaufschlagt, dass das Thermoöl mit dem Druck auf die Trennmembran (14a) einwirkt.

Das Dokument US 2006/0233907 A1 beschreibt eine Formanordnung und ein Verfahren zur Verwendung der Form zur Herstellung von Verbundteilen, die insbesondere aus einem Verstärkungsmittel in einer im Allgemeinen festen Phase und einer Matrix in einer im Allgemeinen flüssigen Phase erzeugt werden.

Das Dokument WO 2010/118923 A2 betrifft das Herstellen eines Verbundbauteils und beschreibt ein Werkzeug, das eine erste Form, eine zweite Form und ein Druckerzeugungsmittel umfasst.

### Beschreibung der Erfindung

Ausgehend davon ist es eine Aufgabe der vorliegenden Erfindung, ein Verfahren anzugeben, mittels dessen ein Bauteil aus einem Faserverbundwerkstoff mit einer hohen Festigkeit und mit einer komplexen Form in besonders einfacher Weise herzustellen ist.

Die Aufgabe der Erfindung wird durch die Merkmale des unabhängigen Anspruchs gelöst. Vorteilhafte Ausgestaltungen sind in den Unteransprüchen angegeben.

Demnach betrifft die Erfindung ein Verfahren zum Herstellen eines Bauteils aus einem Faserverbundwerkstoff, mit den Schritten: Einbringen einer mit einer Matrix imprägnierten Faser auf die Innenform eines zwischen der Innenform und einer Außenform gebildeten Formraums, Einbringen einer Trennmembran auf die mit der Matrix imprägnierten Faser derart, dass sich zwischen der Außenform und der Trennmembran eine sich entlang der Mantelfläche der Außenform erstreckende Kavität bildet, Beaufschlagen der Kavität mit einem Thermoöl mit einem Druck größer Umgebungsdruck derart, dass das Thermoöl mit dem Druck auf die Trennmembran einwirkt, Erhitzen des Thermoöls über eine Glasübergangstemperatur der Matrix, und Abkühlen des Thermoöls unter die Glasübergangstemperatur der Matrix, wobei der Druck des Thermoöls auf die Trennmembran wenigstens während des Abkühlens bis unter die Glasübergangstemperatur im Wesentlichen konstant gehalten wird.

Gegenüber einem Umformverfahren mittels einer aus dem Stand der Technik bekannten Presse, beispielsweise einer C-Rahmenpresse mit ortsfester Innenform und sich ausschließlich in vertikaler Richtung verfahrbaren Außenform zum Generieren eines Pressdruck mit ausschließlicher Vertikalkomponente, zeichnet sich das vorgeschlagene Verfahren dadurch aus, dass der auf die Trennmembran und damit auf die mit der Matrix imprägnierten Faser aufgrund des Thermoöls einwirkende Pressdruck an jeder Stelle der Trennmembran in Richtung der Normalen der Trennmembran und damit ebenso in Richtung der Normalen des zu erhaltenen Bauteils bzw. der mit der Matrix imprägnierten Faser wirkt. Durch die Verwendung des Thermoöls in der Kavität, die zwischen Trennmembran und Außenform gebildet wird, ist somit der Pressdruck auf die Matrix unabhängig von Unebenheiten der Außenform und/oder Innenform. Gegenüber einer bekannten Presse wird der zum Umformen notwendige Press- bzw. Konsolidierungsdruck nicht oder nur zum Teil durch die Presse sondern stattdessen vollständig oder zum Wesentlichen durch das Thermoöl bewirkt.

Durch das vorgeschlagene Erhitzen des Thermoöls über die Glasübergangstemperatur der Matrix sowie das darauffolgende Abkühlen des Thermoöls unter die Glasübergangstemperatur der Matrix, wobei der Druck des Thermoöls auf die Trennmembran wenigstens während des Abkühlens bis unter die Glasübergangstemperatur im Wesentlichen konstant gehalten wird, ist sichergestellt, dass das erhaltene Bauteil besonders stabil wird, ein besseres Gefüge und eine hohe Bruchfestigkeit aufweist. Insbesondere wird durch das vorgeschlagene Verfahren ein Bauteil erhalten, das einen internen Bindungsanteil von > 98% aufweist. Ein konstant gehaltener Druck bedeutet im Sinne der Erfindung, dass der Druck des Thermoöls während der Abkühlphase bevorzugt gleich groß ist. Ein im Wesentlich konstant gehaltener Druck bedeutet bevorzugt, dass sich der Druck in der Abkühlphase nicht um mehr als +/- 5% ändert.

Das vorgeschlagene Verfahren ermöglicht somit in besonders einfacher Weise, die mit der Matrix imprägnierte Faser unter Druck und Temperatur zu einem Bauteil umzuformen, das besonders stabil ist, da durch die gleichmäßige Druckverteilung während der Herstellung sich im Material der mit der Matrix imprägnierten Faser viele Brücken ausbilden konnten. Das derart hergestellte Bauteil ist somit besonderes gut geeignet, um in Flugzeugen, Schiffen und/oder Fahrzeugen verwendet zu werden. Ausgehend von der Grundidee, Thermoöl als Druck- und Heizmedium in der Kavität zwischen Außenform und Trennmembran zu verwenden, und den Druck des Thermoöls wenigstens während des Abkühlens bis unter die Glasübergangstemperatur im Wesentlichen konstant zu halten, lässt sich allseitig an der Trennmembran ein gleich großer Konsolidierungsdruck erhalten, die Brückenbildung im Material in positiver Weise forcieren und ein sehr stabiles Bauteil erzeugen. Dabei ermöglicht das Verfahren sogar die Erzeugung stabiler Bauteile, wenn diese wenigstens abschnittsweise gekrümmt oder sogar komplex geformt ist.

Innenform und Außenform können grundsätzlich eine beliebige Form aufweisen, insbesondere eine Negativform des zu erhaltenen Bauteils, als Zylinder und/oder im Querschnitt als Halbkreis oder halbkreisartig, eben, einfach oder mehrfach gekrümmt und/oder gebogen. Das Verfahren kann mit einer Presse durchgeführt werden, wobei in diesem Fall die Innenform das Unterwerkzeug und die Außenform das Oberwerkzeug darstellen kann. Weiter bevorzugt schließen aufeinander aufliegende Innenform und Außenform an ihren Rändern druckdicht und/oder abdichtend ab und/oder liegen an ihren Rändern berührend aufeinander auf. In diesem Zusammenhang weist das Verfahren bevorzugt den weiteren Schritt Aufsetzen der Außenform auf die Innenform derart auf, dass Außenform und Innenform an ihren Rändern abdichtend zum Ausbilden des Formraums aufeinander aufliegen.

Während das Verfahren grundsätzlich mit beliebigen mit der Matrix imprägnierten Fasern durchgeführt werden kann, sind die Fasern bevorzugt als Glasfasern, Aramidfasern und/oder Karbonfasern bzw. Kohlefasern ausgeführt. Ganz besonders bevorzugt ist die Faser mit einer thermoplastischen Kunststoffmatrix getränkt oder mit einer thermoplastischen Kunststoffmatrix imprägniert. Insbesondere ist die mit der Matrix imprägnierte Faser als Faser-Matrix-Halbzeug, als Faserverbundwerkstoff und/oder als Organoblech ausgeführt, wobei diese Begriffe im Rahmen der Erfindung teils synonym verwendet werden. Die mit der Matrix imprägnierte Faser ist bevorzugt als eine mit einer thermoplastischen Kunststoffmatrix getränkte Faser und/oder als glasfaserverstärktes Aluminium, auch GLARE, als Hybridwerkstoff ausgeführt. Glasfaserverstärktes Aluminium weist in der Regel viele, jeweils nur wenige Zehntel Millimeter dicke Schichten auf, welche abwechselnd aus Aluminium und einem Glasfaserlaminat, beispielsweise glasfaserverstärkter Kunststoff, ausgeführt sind.

Weiter bevorzugt kann die mit der Matrix imprägnierte Faser als Fasergelege oder Gewebe ausgestaltet sein, bei dem Verstärkungsfasern in einer Kunststoffmatrix eingebettet sind. Ebenso kann ein Fadengelege als Faser vorgesehen sein, insbesondere als monoaxiales oder unidirektionales Fadengelege, welches durch Fixieren einer Schar von parallelen Fäden erhalten werden kann, als biaxiales Fadengelege, bei welchem zwei Scharen von parallelen Fäden in Richtung von zwei Achsen fixiert werden sind, oder als multiaxiales Fadengelege, bei dem mehrere Scharen aus parallelen Fäden in Richtung verschiedener Achsen fixiert werden. Gegenüber Geweben zeichnen sich Gelegen durch eine höhere Festigkeit bedingt durch Wegfall der bei Geweben unvermeidbaren Ondulation aus. Ferner kann bei Geweben eine Mehrzahl von Bindungsarten wie Leinenbindung oder Köperbindung beinhaltet sein.

Die mit der Matrix imprägnierte Faser kann ein sogenanntes Prepregmaterial umfassen und/oder als Tape ausgebildet sein. Bevorzugt wird die mit der Matrix imprägnierte Faser als Endlosmaterial bereitgestellt. Bei der Matrix kann es sich um eine Epoxidharz- oder Thermoplastmatrix wie auch Mischungen derselben handeln. Beispielsweise kann die Matrix ein Polyphenylensulfid, ein Polyetherketon wie beispielsweise ein Polyaryletherketon (PAEK) oder ein Polyetheretherketon (PEEK) als Thermoplaste umfassen. Das Prepregmaterial hat bevorzugt eine Dicke von 50 µm bis 200 µm, beispielsweise ca. 180 µm, wobei darin enthaltene Kohlefasern bevorzugt eine Dicke zwischen 0,1 µm und 20 µm, beispielsweise 6 µm bis 9 µm aufweisen.

Wie bereits erwähnt wird während des Verfahrens die Temperatur des Thermoöls über die Glasübergangstemperatur der Matrix erhöht. Die Glasübergangstemperatur Tg ist im Sinne der Erfindung der bei einer Temperaturerhöhung bzw. dem Erhitzen stattfindende allmähliche und reversible Übergang in amorphen Bereichen der Matrix von einem harten und relativ spröden Zustand in einen viskosen oder kautschukartigen Zustand. Die Glasübergangstemperatur der Matrix kann durch dynamische Differenzkalorimetrie bestimmt werden - ein Verfahren der thermischen Analyse zur Messung der abgegebenen oder aufgenommenen Wärmemenge beim Aufheizung oder Abkühlung der Matrix. Die Glasübergangstemperatur Tg der Matrix kann beispielsweise gemäß der Norm DIN 51007 bestimmt werden.

Weiter bevorzugt wird während des Verfahrens die Temperatur des Thermoöls über die Schmelztemperatur der Matrix erhitzt. Die Schmelztemperatur der Matrix ist bevorzugt die Temperatur, bei dem die Matrix sehr weich wird und nicht mehr formstabil ist, also nicht mehr in eine Ursprungsform zurück gebracht werden kann. Bevorzugt ist die Temperatur des Thermoöls wenigstens 10 °C, 20 °C, 50 °C, 100 °C oder 200 °C größer der Schmelztemperatur der Matrix.

Die Glasübergangstemperatur und die Schmelztemperatur der Matrix sind vom der chemischen Zusammensetzung der Matrix abhängig. Bei den Polyetherketonen bestimmen unteranderem die variablen Anteile an Ether- und Karbongruppen die physikalischen Eigenschaften wie die Höhe der Glasübergangstemperatur und der Schmelztemperatur. Bei Polyetheretherketon (PEEK) beträgt die Schmelztemperatur in etwa 335 °C und die Glasübergangstemperatur in etwa 143 °C. Bei Polyaryletherketon (PAEK) beträgt die Schmelztemperatur in etwa 373°C und die Glasübergangstemperatur in etwa 152 °C. Die Höhe der Glasübergangstemperatur und der Schmelztemperatur können aber je nach Herstellungsverfahren und genauer Zusammensetzung des Kunstoffs variieren.

Der Druck des Thermoöls auf die Trennmembran beim Beaufschlagen der Kavität mit einem Thermoöl mit einem Druck größer Umgebungsdruck ist bevorzugt wenigstens 1 bar, 2 bar, 5 bar oder 10 bar größer dem Umgebungsdruck. Weiter bevorzugt kann der Druck des Thermoöls auf die Trennmembran auf einen Druck von bevorzugt wenigstens 5 bar, 10 bar, 20 bar, 30 bar oder 40 bar größer Umgebungsdruck erhöht werden. Weiter bevorzugt kann der Druck auch während des Erhitzens des Thermoöls über die Glasübergangstemperatur der Matrix konstant gehalten werden.

Gemäß einer weiteren bevorzugten Weiterbildung ist vorgesehen, dass eine Heizrate beim Erhitzen des Thermoöls größer als eine Kühlrate beim Kühlen des Thermoöls ist. Die Heizrate bzw. Kühlrate sagt aus, wie schnell sich die Temperatur des Thermoöls ändert. Ein langsames Abkühlen kann bevorzugt dazu führen, dass sich mehr Brücken im Material ausbilden und das Bauteil besonders stabil wird. Ein schnelles Aufheizen führt insbesondere dazu, dass der Herstellungsprozess sich nicht unnötig verlängert. Bevorzugt beträgt die Heizrate des Thermoöls 20 °C/min und die Kühlrate 10 °C/min. Weiter bevorzugt beträgt die Heizrate des Thermoöls 15 °C/min und die Kühlrate 5 °C/min. Auch möglich sind eine Heizrate des Thermoöls von 30 °C/min und eine Kühlrate von 20 °C/min.

Wie bereits erwähnt sieht das Verfahren das Erhitzen sowie das Abkühlen des Thermoöls vor. Zwischen diesen Schritten und gemäß einer bevorzugten Weiterbildung umfasst das Verfahren den Schritt Halten der Temperatur des Thermoöls über der Glasübergangstemperatur der Matrix für wenigstens 10 Minuten, bevorzugt wenigstens 20 Minuten, weiter bevorzugt wenigstens 40 Minuten. Halten der Temperatur bedeutet insbesondere, dass sich die Temperatur in der Haltephase nicht ändert. Bevorzugt bedeutet dies, dass sich die Temperatur in der Haltephase nicht um mehr als +/- 5% ändert. Weiter bevorzugt ist vorgesehen, dass die Temperatur während der Haltephase nicht nur über der Glasübergangstemperatur der Matrix liegt, sondern auch über der Schmelztemperatur der Matrix. Weitere bevorzugt wird die Temperatur des Thermoöls über der Schmelztemperatur der Matrix für wenigstens 10 Minuten, bevorzugt wenigstens 20 Minuten, weiter bevorzugt wenigstens 40 Minuten gehalten. Bevorzugt wird die Temperatur des Thermoöls wenigstens 10 °C, 20 °C, 50 °C, 100 °C oder 200 °C größer der Schmelztemperatur der Matrix gehalten.

Der Temperaturverlauf zum Herstellen des Bauteil umfasst also bevorzugt drei Phasen: eine Aufheizphase, eine Haltephase und eine Abkühlphase. Beim graphischen Darstellen des Temperaturverlaufs, sprich beim Auftragen der Temperatur des Thermoöls gegen die Zeit, kann der Temperaturverlauf trapezförmig sein. Dies bedeutet, dass die Aufheizphase und die Abkühlphase eine gewisse Zeit in Anspruch nehmen und bevorzugt kein instantanes bzw. schlagartiges Erhitzen bzw. Kühlen des Thermoöls durchgeführt wird. Bevorzugt beträgt die Länge der Aufheizphase 20 min, 30 min, 40 min, oder 60 min.

Weiter bevorzugt beträgt die Länge der Abkühlphase 20 min, 30 min, 40 min, 60 min, 80 min, 120 min wobei die Abkühlphase bevorzugt länger dauert als die Aufheizphase.

Wie bereits erwähnt umfasst das Verfahren den Schritt Abkühlen des Thermoöls unter die Glasübergangstemperatur der Matrix. Bevorzugt ist ferner vorgesehen, dass die Temperatur des Thermoöls nach dem Abkühlen wenigstens 10 °C, 20 °C, 50 °C, oder 100 °C kleiner der Glasübergangstemperatur der Matrix liegt. Insbesondere ist vorgesehen, dass die Temperatur nach dem Abkühlen im Bereich einer, ein besonders wirtschaftliches Wiederaufheizen ermöglichende Übergangstemperatur zwischen 80 °C und 125 °C oder im Wesentlichen bei Raumtemperatur liegt, also in einem Bereich zwischen 15 °C und 35 °C.

Gemäß einer weiteren bevorzugten Weiterbildung umfasst das Verfahren den Schritt Erhitzen des Thermoöls auf eine Temperatur ≥ 250 °C, ≥ 300 °C oder ≥ 400 °C, und Abkühlen des Thermoöls auf eine Temperatur ≤ 80 °C, ≤ 100 °C, ≤ 150 °C, oder ≤ 200 °C Bevorzugt wird die Temperatur des Thermoöls in abhängig von der verwendeten Matrix und dessen Glasübergangstemperatur und Schmelztemperatur gewählt. Weiter bevorzugt wird das Thermoöl in der Haltephase bei einer Temperatur ≥ 250 °C, ≥ 300 °C oder ≥ 400 °C gehalten. Bevorzugt erfolgt das Beaufschlagen der Kavität mit dem Thermoöl mit der Temperatur von 350 °C bis 410 °C und das Kühlen des Thermoöls auf 30 °C.

Während der Herstellung des Bauteils wird bevorzugt nicht nur die Temperatur des Thermoöls geändert, sondern auch der Druck, den das Thermoöl auf die Trennmembran bewirkt. Gemäße einer bevorzugten Weiterbildung umfasst das Verfahren den Schritt Erhöhen des Drucks des Thermoöls auf die Trennmembran ≥ 3 bar, ≥ 5 bar oder ≥ 10 bar vor, während und/oder nach dem Erhitzen über die Glasübergangstemperatur der Matrix. Bevorzugt wird der Druck des Thermoöls in der Aufheizphase des Thermoöls erhöht. Der Druck kann vor Erreichen der Glasübergangstemperatur erhöht werden, beim Erreichen der Glasübergangstemperatur oder nach Überschreiten der Glasüberganstemperatur. Besonders bevorzugt wird der Druck des Thermoöls in der Haltephase der Temperatur erhöht. Dies bedeutet bevorzugt, dass der Druck des Thermoöls besonders bevorzugt nach Überschreiten der Glasüberganstemperatur der Matrix erhöht wird.

Das Verfahren kann des Weiteren den Schritt Halten des Drucks des Thermoöls auf die Trennmembran auf ≥ 3 bar, ≥ 5 bar oder ≥ 10 bar für wenigstens 80 Minuten, bevorzugt wenigstens 120 Minuten, weiter bevorzugt wenigstens 180 Minuten. Insbesondere ist vorgesehen, dass der Druck in dieser Haltephase konstant gehalten wird, sich also sein Wert beispielsweise innerhalb von +/-5% nicht ändert.

Gemäß einer weiteren bevorzugten Weiterbildung umfasst das Verfahren den Schritt Verringern des Drucks des Thermoöls auf die Trennmembran im Wesentlichen auf Umgebungsdruck nach dem Kühlen des Thermoöls unter die Glasübergangstemperatur der Matrix. Insbesondere nach der Abkühlphase des Thermoöls kann der Druck des Thermoöls verringert werden.

Analog zum Temperaturverlauf umfasst der Druckverlauf bevorzugt drei Phasen, eine Druckerhöhungsphase, eine Druckhaltephase und eine Druckerniedrigungsphase. Bei einer grafischen Auftragung des Drucks gegen die Zeit kann der Druckverlauf trapezförmig sein. Alternativ kann der Druckverlauf nahezu rechteckförmig sein, also eine quasi instantane Druckerhöhung und Druckerniedrigung umfassen.

Bevorzugt ist vorgesehen, dass eine Druckerhöhungsrate beim Erhöhen des Drucks des Thermoöls auf die Trennmembran im Wesentlichen einer Druckerniedrigungsrate beim Verringern des Drucks des Thermoöls auf die Trennmembran entspricht. Dies bedeutet, dass der Druck im Wesentlichen gleich schnell aufgebaut wie abgebaut wird. Insbesondere bedeutet dies, dass die Druckerhöhungsrate gleich groß ist oder in einem Bereich +/-5% gleich groß ist wie die Druckerniedrigungsrate.

Weiter bevorzugt ist vorgesehen, dass die Haltephase des Druckes vor oder während der Haltephase der Temperatur beginnt. In anderen Worten bedeutet dies bevorzugt, dass im ersten Fall der Druck schon im Wesentlichen konstant bei einem Druck ≥ 3 bar, ≥ 5 bar oder ≥ 10 bar gehalten wird, während das Thermoöl noch erhitzt wird. Im zweiten Fall bedeutet dies bevorzugt, dass der Druck erst in der Haltephase der Temperatur des Thermoöls bei einer Temperatur größer der Glasüberganstemperatur der Matrix bei einem Druck ≥ 3 bar, ≥ 5 bar oder ≥ 10 bar konstant gehalten wird.

Gemäß einer weiteren bevorzugten Weiterbildung umfasst das Verfahren die Schritte Erhöhen des Drucks des Thermoöls, Verringern des Drucks des Thermoöls, Erhitzen des Thermoöls und Abkühlen des Thermoöls, wobei der Druck des Thermoöls auf die Trennmembran unabhängig von der Temperatur des Thermoöls verändert werden kann. Insbesondere ist vorgesehen, dass die Druckänderung unabhängig von der Temperaturänderung erfolgen kann und dass die Temperaturänderung unabhängig von der Druckänderung erfolgen kann. In anderen Worten bedeutet dies bevorzugt, dass der Druck des Thermoöls nicht steigt, weil das Thermoöl erhitzt wird, oder dass der Druck fällt, weil das Thermoöl abkühlt.

Nach einer weiteren bevorzugten Ausgestaltung umfasst das Verfahren den Schritt Einbringen eines Stringers, eines Spants und/oder einer Aufdickung in eine Aussparung der Innenform, insbesondere vor dem Einbringen der mit der Matrix imprägnierten Faser. Stringer, Spanten bzw. Aufdickungen können lokale Verstärkungen, beispielsweise für Fenster-, Türen- und/oder Klappenöffnungen bei einem Flugzeug, Schiff oder Fahrzeug, und/oder Strukturaussteifungen darstellen, die durch den vorgeschlagenen Verfahrensschritt beim Herstellen des Formteils mit eingebracht werden können. Das Bauteil kann durch das Einbringen des Stringers, Spants und/oder der Aufdickung eine beliebig komplexe Form annehmen. Beim Aufschmelzen der mit der Matrix imprägnierten Faser durch Beaufschlagen der Kavität mit dem Thermoöl mit der Temperatur größer dem Schmelzpunkt der Matrix werden Verbindungskontaktflächen der Stringer, Spanten bzw. Aufdickungen aufgeschmolzen und derart mit dem Faserverbundwerkstoff verbunden. Die Aussparung ist bevorzugt derart beispielsweise durch einen Fräsvorgang ausgestaltet, dass bei in die Aussparung eingelegtem Stringer, Spant bzw. Aufdickung dieser bündig mit der Mantelfläche der Innenform abschließt. Der Stringer, der Spant bzw. die Aufdickung wird bevorzugt als vorgefertigtes und konsolidiertes Bauteil in die Aussparung eingesetzt.

Nach einer bevorzugten Weiterbildung umfasst das Verfahren den Schritt Kühlen der Innenform auf eine Temperatur ≤ 150 °C, ≤ 200 °C oder ≤ 250 °C oder nach dem vorhergehenden Schritt Kühlen der Innenform auf eine Temperatur ≤ 150 °C, ≤ 200 °C oder ≤ 250 °C im Bereich des Stringers, des Spants und/oder der Aufdickung. Bevorzugt sind dazu im Bereich des Stringers, des Spants und/oder der Aufdickung eine Mehrzahl sich axial durch die Innenform erstreckende Zuführkanäle vorgesehen, die sich um die Aussparung herum anordnen. Derart lässt sich sicherstellen, dass der in der Aussparung vorgesehene Stringer, Spant und/oder die Aufdickung durch das erhitzte Thermoöl bedingt zwar an der jeweiligen Verbindungskontaktfläche aufschmilzt der verbleibende Teil des Stringers, des Spants bzw. der Aufdickung jedoch unterhalb einer Aufweichungstemperatur verbleibt.

Hinsichtlich des zu formenden Bauteils ist gemäß einer bevorzugten Weiterbildung vorgesehen, dass das Verfahren mit einer die Innenform und die Außenform aufweisenden Presse durchgeführt wird, wobei die Innenform und/oder die Außenform ausgebildet ist, ein Flugzeugbauteil, ein Schiffsbauteil oder ein Fahrzeugbauteil auszuformen. Innenform und Außenform können grundsätzlich eine beliebige Form aufweisen, wobei bevorzugt die Innenform und Außenform zum Herstellen eines Bauteils eines Flugzeugs, eines Schiffes oder eines Fahrzeuges ausgebildet sind. Des Weiteren kann es sich beim Bauteil um ein Rotorblatt eines Flugzeuges oder einer Windkraftanlage handeln.

Nach einer bevorzugten Weiterbildung ist eine die Innenform und die Außenform aufweisende Presse vorgesehen, insbesondere eine C-Rahmenpresse, und/oder das Verfahren den Schritt, nach dem Einbringen der Trennmembran, Verspannen der Innenform und der Außenform gegeneinander, bis dass der Formraum ausgebildet ist, aufweist. Außenform und Innenform sind bevorzugt ausgeführt, dass der Formraum nach dem Verspannen druckdicht ist. Die Presse weist bevorzugt ein Pressengestell auf, insbesondere ein C-Gestell, welches einen oberen horizontalen C-Schenkel, einen unteren horizontalen C-Schenkel und eine vertikale C-Basis aufweist, die den oberen C-Schenkel und den unteren C-Schenkel miteinander verbindet.

Die Innenform ist bevorzugt ortsfest an dem unteren horizontalen C-Schenkel als Unterwerkzeug und die Außenform über einen Presszylinder an dem oberen C-Schenkel als Oberwerkzeug derart abgestützt, dass durch Betätigen des Presszylinders die Innenform und die Außenform gegeneinander verspannt werden können, bis dass der Formraum ausgebildet ist. Das C-Gestell ist bevorzugt in Rahmenbauweise ausgeführt, wobei in Längsrichtung hintereinander mehrere C-förmig ausgebildete und miteinander verbundene Pressenrahmen vorgesehen sein können. Die einzelnen Pressenrahmen sind bevorzugt mit Spannelementen miteinander verbunden. Neben einer zuvor beschriebenen Oberkolbenpresse, bei der der Presszylinder an dem oberen C-Schenkel abgestützt ist, kann die Presse ebenso in Unterkolben-Bauweise ausgeführt sein, so dass die Innenform durch die Presszylinder gegen die an dem oberen C-Schenkel vorgesehene Außenform verspannbar ist.

Nach einer bevorzugten Weiterbildung umfasst die mit der Matrix imprägnierte Faser eine vorkonsolidierte Halbzeugschale und/oder vorkonsolidierte Einzellagen. Die insbesondere mit der thermoplastischen Kunststoffmatrix getränkte Faser kann zudem ein Fasergewebe und/oder ein Fasergelege umfassen, die in die thermoplastische Kunststoffmatrix eingebettet sind. Bei Geweben und Gelegen können Fasern rechtwinkelig zueinander verlaufen, um mechanische Eigenschaften wie Steifigkeit, Festigkeit und/oder Wärmeausdehnung gegenüber als aus dem Stand der Technik bekannten Materialien wie Metallblechen besser zu definieren.

Ganz besonders bevorzugt wird zum Erhitzen, also beim Beaufschlagen der Kavität mit dem Thermoöl mit der Temperatur größer der Schmelztemperatur der Matrix und beim darauffolgenden Kühlen das gleiche Thermoöl verwendet. Mit anderen Worten wird das in der Kavität befindliche Thermoöl bevorzugt während eines Pumpvorgangs gekühlt und wiederum der Kavität zugeführt, während das Thermoöl weiterhin mit dem Druck größer Umgebungsdruck auf die Trennmembran einwirkt.

Nach einer bevorzugten Weiterbildung umfasst das Verfahren den Schritt Vorheizen der Außenform und/oder der Innenform auf eine Grundtemperatur, insbesondere vor dem Einbringen der mit der Matrix imprägnierten Faser. Dazu können in der Außenform und/oder der Innenform Heiz- und/oder Kühlkanäle zum Temperieren der jeweiligen Form vor und/oder während des Aushärtens vorgesehen sein. Die Heizkanäle und/oder Kühlkanäle verlaufen bevorzugt in axialer Richtung in regelmäßigen Abständen und/oder verteilt über die gesamte Mantelfläche der jeweiligen Form. Zum Beaufschlagen der Kavität mit dem Thermoöl sind bevorzugt Zuführkanäle für das Thermoöl vorgesehen, welche sich in radialer Richtung durch die Außenform hindurch erstrecken.

Nach einer noch weiter bevorzugten Ausgestaltung umfasst das Verfahren den Schritt Beaufschlagen der Mantelfläche der Innenform mit einem Unterdruck. Bevorzugt ist die Innenform in regelmäßigen Abständen entlang der Mantelfläche mit einer Mehrzahl Unterdruckkanäle versehen, die sich in radialer Richtung durch die Unterform hindurch erstrecken können und/oder mit einer Vakuumpumpe verbunden sind, durch die der Unterdruck erzeugbar ist. In analoger Weise kann eine Heiz- und/oder Kühleinrichtung vorgesehen sein, um die Außenform und/oder die Innenform mittels der Heiz- und/oder Kühlkanäle auf die Grundtemperatur vorzuheizen bzw. zu kühlen.

Zur Ausgestaltung der Innenform und/oder der Außenform existieren grundsätzlich verschiedene Möglichkeiten. Nach einer besonders bevorzugten Weiterbildung sind die Innenform und/oder die Außenform aus Invar ausgestaltet. Invar ist eine Eisen-Nickel-Legierung mit einem sehr geringen Wärmeausdehnungskoeffizienten, so dass sich eine so gestaltete Innenform und/oder Außenform durch eine äußerst geringe Ausdehnung aufgrund der durch das Thermoöl hervorgerufenen Temperaturänderung auszeichnet.

Da sowohl beim Erhitzen des Thermoöls auf eine Temperatur größer der Glasüberganstemperatur der Matrix, sowie beim Kühlen des Thermoöls unter die Glasübergangstemperatur der Matrix der Druck größer Umgebungsdruck beträgt, existiert während des Umformens bevorzugt keine drucklose Phase. Die insbesondere mit der thermoplastischen Kunststoffmatrix getränkte Faser weist bevorzugt eine vergleichbare Dicke wie die Kavität auf, so dass das Thermoöl aufgrund seiner wesentlich höheren thermischen Kapazität ausreicht, um den Schmelzvorgang zum Umformen der insbesondere mit der thermoplastischen Kunststoffmatrix getränkten Faser herbeizuführen.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: eine Vorrichtung zum Durchführen des Verfahrens zum Herstellen eines Bauteils aus einem Faserverbundwerkstoff gemäß einem Ausführungsbeispiel der Erfindung in einer schematischen Perspektivansicht,
- Fig. 2: einen Ausschnitt der in Fig. 1 gezeigten Vorrichtung mit Innenform und Außenform in einer schematischen Schnittansicht,
- Fig. 3: einen exemplarischen Druck- und Temperaturverlauf des Verfahrens gemäß einem Ausführungsbeispiel der Erfindung,
- Fig. 4: einen exemplarischen Druck- und Temperaturverlauf des Verfahrens gemäß einem weiteren Ausführungsbeispiel der Erfindung, und
- Fig. 5: einen exemplarischen Druck- und Temperaturverlauf des Verfahrens gemäß einem noch weiteren Ausführungsbeispiel der Erfindung.

### Detaillierte Beschreibung der Ausführungsbespiele

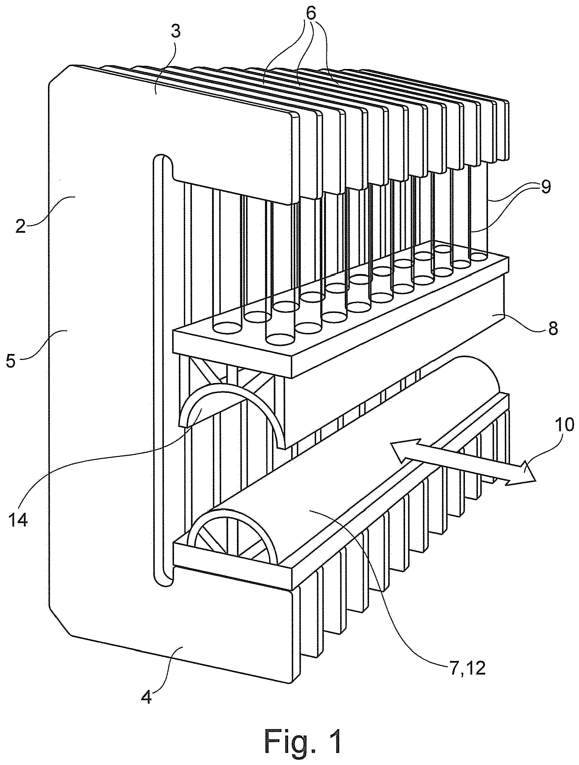

Fig. 1 zeigt eine Vorrichtung in Form einer C-Rahmenpresse zum Ausführen eines Verfahrens zum Herstellen eines Bauteils eines Flugzeugs aus Organoblech als Faserverbundwerkstoff. Die C-Rahmenpresse weist ein als C-Gestell 2 ausgestaltetes Pressengestell mit einem oberen horizontalen C-Schenkel 3, einem unteren horizontalen C-Schenkel 4 sowie einer vertikalen C-Basis 5 auf, die den oberen C-Schenkel 3 und den unteren C-Schenkel 4 miteinander verbindet. Die Presse ist in Rahmenbauweise ausgeführt und weist eine Mehrzahl in Längsrichtung der Presse hintereinander angeordneten und jeweils C-förmig ausgebildeten und miteinander verbundenen Pressenrahmen 6 auf.

Auf den unteren C-Schenkel 4 aufgestützt ist eine zylinderartige Innenform 7 vorgesehen. Die Innenform 7 ist konvex ausgeführt und im Querschnitt halbkreisartig mit einem Zylinderdurchmesser von 6 m ausgestaltet. In Längsrichtung erstreckt sich die Innenform 7 zwischen ihren Enden mit einer Zylinderhöhe von 15 m. Oberhalb der Innenform 7 ist eine zu der Innenform 7 kongruente also ebenso zylinderartige und entsprechend konkav ausgeführte Außenform 8 vorgesehen. Mehrere Presszylinder 9 sind an den oberen C-Schenkeln 3 abgestützt und wirken auf die Außenform 8 ein. Derart lässt sich die Außenform 8 durch die Presszylinder 9 im Sinne eines Laufholms in vertikale Richtung bewegen, sprich ein Öffnen des Formraums durchführen um das Bauteil 1 aus der so ausgestalteten Vorrichtung herauszunehmen, angedeutet durch Pfeil 10.

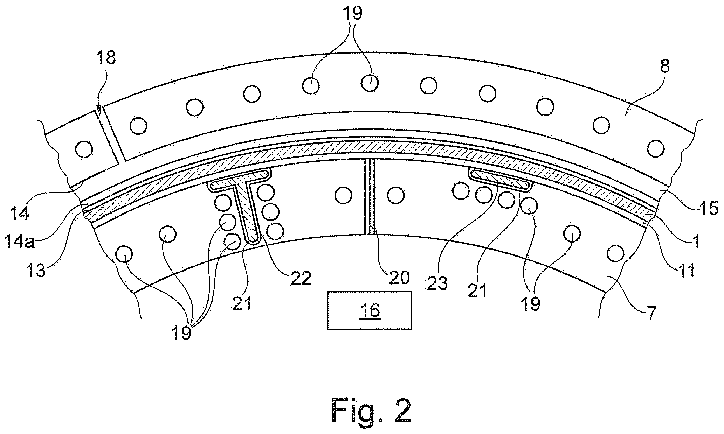

Unter Verweis auf den in Fig. 2 dargestellten Ausschnitt von aufeinander aufliegender Innenform 7 und Außenform 8 als schematische Schnittansicht wird zunächst in der in Fig. 1 gezeigten Situation, in der die Außenform 8 beabstandet zu der Innenform 7 ist, ein Trennmittel 10, angedeutet in Fig. 2, auf die Innenform 7 aufgesprüht. Daraufhin wird eine mit einer thermoplastischen Kunststoffmatrix getränkte Faser, insbesondere eine Glasfaser, Aramidfaser und/oder Kohlefaser, als vorkonsolidierte Halbzeugschale oder in vorkonsolidierten Einzellagen als sogenanntes Organoblech auf die Innenform 7 aufgebracht, so dass das Organoblech 7 die gesamte Mantelfläche 12 der zylinderartigen Innenform 7 bis zu den Rändern der Innenform 7 bedeckt.

In einem optionalen Schritt wird eine Trennfolie 13 als Antihaftschicht auf die mit der thermoplastischen Kunststoffmatrix getränkten Faser 1 aufgebracht. Die Trennfolie 13 wird wiederum mit einer Trennmembran 14 aus Metall bedeckt, welche ebenso die komplette Mantelfläche 12 der Innenform 7 bedeckt.

Daraufhin wird die Außenform 8, wie in Fig. 2 gezeigt, derart über der Innenform 7 angeordnet, dass sich zwischen der Mantelfläche 14 der Außenform 8 eine Kavität 15 ausbildet. Die Kavität erstreckt sich derart über die gesamte Mantelfläche 14 der Außenform 8 und weist eine annähernd gleichbleibende Dicke zwischen 2 und 5 mm auf. Innenform 7 und Außenform 8 sind aus Invar Eisen-Nickel-Legierung ausgeführt und ausgestaltet, dass, wenn die Außenform 8 wie in Fig. 2 gezeigt auf der Innenform 7 unter Ausbildung der Kavität 15 aufliegt, Innenform 7 und Außenform 8 an den Rändern ihrer jeweiligen Mantelflächen 12, 14 abdichtend abgeschlossen sind bzw. berührend aufeinander aufliegen.

Die Vorrichtung weist eine Thermoöltemperier- und Druckeinrichtung 16 auf, welche zum einen ausgebildet ist, die Kavität 15 mit einem Thermoöl 17 zu beaufschlagen, so dass aufgrund des Thermoöls 17 ein bestimmter Druck auf die Trennmembran ausgeübt wird. Da sich das Thermoöl 17 innerhalb der Kavität 15 entlang der gesamten Mantelfläche 14 der Außenform 8 frei verteilen kann, wirkt an jeder Stelle der Trennmembran 14a der Druck in Richtung der Normalen der Mantelfläche 12 der Innenform 7 bzw. zur Erstreckungsrichtung der mit der thermoplastischen Kunststoffmatrix getränkten Faser 1. Des Weiteren kann das Thermoöl von der Thermoöltemperier- und Druckeinrichtung 16 temperiert, also erhitzt und gekühlt werden.

Das Thermoöl 17 dient also als Druck-, Heiz- und Kühlmedium, um allseitig über die Trennmembran 14a einen gleich bleibenden Konsolidierungsdruck auf die mit der thermoplastischen Kunststoffmatrix getränkten Faser auszuüben sowie um eine gezielte, gleichmäßige Erwärmung der mit der thermoplastischen Kunststoffmatrix getränkten Faser 1 und ein gezieltes und gleichmäßiges Abkühlen zu ermöglichen. Durch das Thermoöl 17 mit seiner gegenüber mit der thermoplastischen Kunststoffmatrix getränkten Faser 1 wesentlich höheren thermischen Kapazität wird derart der Schmelzvorgang des mit der thermoplastischen Kunststoffmatrix getränkten Faser 1 herbeigeführt.

Das Herstellungsverfahren sieht vor, dass das Thermoöl 17 über eine Glasübergangstemperatur der Matrix erhitzt wird und unter die Glasübergangstemperatur der Matrix abgekühlt wird, wobei der Druck des Thermoöls 17 auf die Trennmembran 14a wenigstens während des Abkühlens bis unter die Glasübergangstemperatur im Wesentlichen konstant gehalten wird.

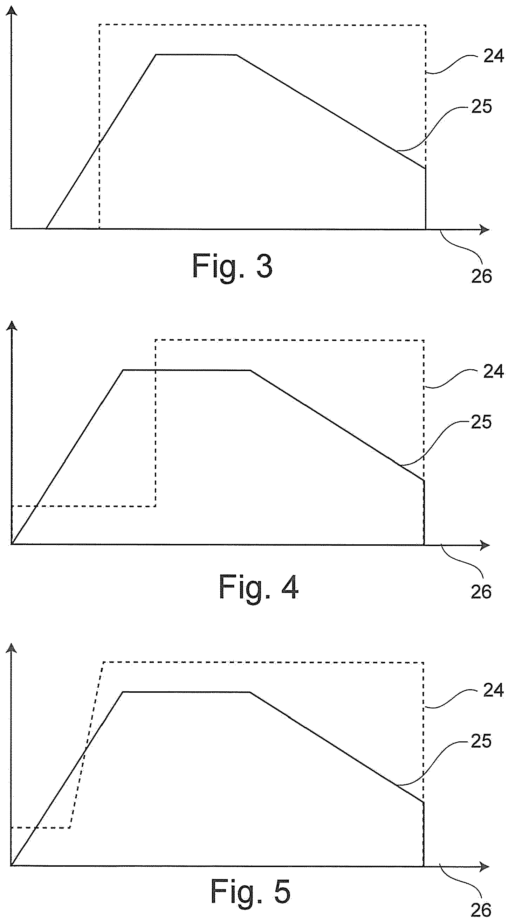

In den Figuren 3, 4 und 5 sind drei exemplarische Druckverläufe 24 und Temperaturverläufe 25 gezeigt. Die Werte des Drucks und der Temperatur des Thermoöls 17 wurden gegen die Zeit 26 grafisch aufgetragen. In den vorliegenden Ausführungsbeispielen handelt es sich bei der mit der thermoplastischen Kunststoffmatrix getränkten Faser 1 um ein Prepregmaterial. Die Kunststoffmatrix ist in diesem Ausführungsbeispiel aus einem Polyaryletherketon (PAEK) weist eine Glasüberganstemperatur von 147 °C und eine Schmelztemperatur von 305 °C auf. Bei der Faser handelt es sich um eine Karbonfaser.

In Figur 3 wird das Thermoöl 17 von Raumtemperatur auf 350 °C erhitzt. Das Thermoöl wird insofern über die Glasüberganstemperatur sowie über die Schmelztemperatur der Matrix erhitzt, wobei die Heizrate etwa 20 °C/min beträgt. Während des Erhitzens wird der der Druck des Thermoöls 17 von Umgebungsdruck auf 18 bar erhöht. Die Druckerhöhung findet im Wesentlichen schlagartig statt, also innert einer sehr kurzen Zeitspanne, so dass in Figur 3 ein senkrechter Anstieg des Druckverlaufs 24 gezeigt ist. Die Druckerhöhung des Thermoöls findet bei einer Temperatur von 200 °C statt. Der Druck wird also erhöht, nachdem die Temperatur die Glasüberganstemperatur von 147 °C überschritten hat aber die Schmelztemperatur von 305 °C noch nicht erreicht hat. Nach der Druckerhöhung wird der Druck konstant bei 18 bar gehalten. Während der Haltephase des Drucks, die 80 Minuten beträgt, wird das Thermoöl 17 noch erhitzt, bis es die Temperatur von 350 °C erreicht hat. Diese Temperatur wird für 12 Minuten gehalten. Danach beginnt die Abkühlphase des Thermoöls 17, wobei das Thermoöl mit einer Kühlrate von 10 °C/min gekühlt wird. Das Thermoöls 17 wird bis auf 100 °C gekühlt, also bis unter die Glasüberganstemperatur von 147 °C, während der Druck des Thermoöls konstant gehalten wird. Bei 100 °C wird der Druck des Thermoöls erniedrigt, wobei dies wie schon die Druckerhöhung im Wesentlichen schlagartig verläuft. Der Druckverlauf 24 in Figur 3 ist also im Wesentlichen Rechteckförmig, während der Temperaturverlauf 25 trapezförmig ist.

In Figur 4 wird das Thermoöl 17 von 25 °C auf 365 °C erhitzt. Das Thermoöl 17 wird also über die Glasüberganstemperatur sowie über die Schmelztemperatur der Matrix erhitzt, wobei die Heizrate etwa 10 °C/min beträgt. Die Aufheizphase dauert etwa 35 Minuten. Danach wird die Temperatur des Thermoös 17 bei 365 °C für 40 Minuten gehalten. Der Druck beträgt während der gesamten Aufheizphase etwa 2 bar. Erst während der Haltephase der Temperatur wird der Druck von 2 bar auf 10 bar erhöht. Diese Druckerhöhung findet im Wesentlichen schlagartig statt, also innert einer sehr kurzen Zeitspanne, so dass in Figur 4 ein senkrechter Anstieg des Druckverlaufs 24 gezeigt ist. Die Druckerhöhung des Thermoöls 17 findet statt, nachdem das Thermoöl 17 für 10 Minuten bei 365 °C gehalten wurde. Nach der Druckerhöhung wird der Druck konstant bei 20 bar gehalten. Die Haltephase der Temperatur wird nach 40 Minuten beendet und das Thermoöl 17 wird mit einer Kühlrate von 3 °C/min gekühlt. Der Druck wird während des Kühlens konstant weiter bei 20 bar gehalten. Das Thermoöl 17 wird bis auf 100 °C gekühlt, also bis unter die Glasüberganstemperatur von 147 °C, während der Druck des Thermoöls konstant gehalten wird. Die Abkühlphase dauert etwa 85 Minuten. Danach wird der Druck des Thermoöls bis auf Umgebungsdruck, erniedrigt wobei dies wie schon die Druckerhöhung im Wesentlichen schlagartig verläuft.

In Figur 5 ist ein weiterer exemplarischer Druck- und Temperaturverlauf gezeigt. Das Thermoöl 17 wird analog zu Figur 4 von 25 °C auf 365 °C erhitzt, also über die Glasüberganstemperatur sowie über die Schmelztemperatur der Matrix, wobei die Heizrate etwa 10 °C/min beträgt. Die Aufheizphase dauert etwa 34 Minuten. Danach wird die Temperatur des Thermoös 17 bei 365 °C für 50 Minuten gehalten. Der Druck beträgt zu Beginn der Aufheizphase während der ersten 17 Minuten 2 bar. Danach wird der Druck auf 12 bar erhöht, wo er gehalten wird. Der Druck wird erhöht, wenn das Thermoöl etwa 200 °C erreicht hat. Die Druckerhöhung findet nicht schlagartig statt, sondern etwa während 10 Minuten mit einer Druckerhöhungsrate von etwa 1 bar/min. Die Haltephase des Drucks bei 12 bar wird also vor der Haltephase der Temperatur bei 365 °C erreicht. Die Haltephase der Temperatur wird nach 50 Minuten beendet und das Thermoöl 17 wird mit einer Kühlrate von 5 °C/min auf eine Temperatur von 100°C gekühlt. Der Druck wird während des Kühlens konstant weiter bei 12 bar gehalten. Die Abkühlphase dauert in etwa 50 Minuten. Danach, also beim Erreichen von etwa 100 °C, wird der Druck des Thermoöls erniedrigt, wobei dies im Wesentlichen schlagartig verläuft.

Figur 2 zeigt des Weiteren, dass zum Einbringen des Thermoöls 17 in die Kavität 15 in der Außenform 8 verschiedene Zuführkanäle 18 vorgesehen sind, die sich radial durch die Außenform 8 hindurch erstrecken. Zum Heizen bzw. Kühlen sind in der Innenform 7 sowie in der Außenform 8 sich axial erstreckende Heiz- und/oder Kühlkanäle 19 vorgesehen, wodurch eine Vorheizung, Kühlung und/oder Temperaturführung der entsprechenden Form möglich ist. Durch einen in der Innenform 7 vorgesehenen, sich radial durch die Innenform 7 erstreckenden Vakumierkanal 20 lässt sich die Mantelfläche 12 der Innenform 7 mit Unterdruck beaufschlagen.

In der Innenform 7 sind Aussparungen 21 vorgesehen, in die, wie aus Fig. 2 zu erkennen ist, ein Stringer 22, links, sowie eine Aufdeckung 23, rechts, eingebracht sind. Angrenzend an die jeweiligen Aussparungen 21 sind mehrere Kühlkanäle 19 angeordnet, die die jeweilige Aussparung 19 umgrenzen. Während Verbindungskontaktflächen des Stringers 22 bzw. der Aufdeckung 23 durch das Thermoöl 17 aufschmelzen und sich mit der mit der thermoplastischen Kunststoffmatrix getränkten Faser 1 verbinden können, dienen die um die Aussparung 21 herum angeordneten Kühlkanäle 19 zur Kühlung des Stringers 22 bzw. der Aufdeckung 23, damit diese unter einer Aufweichungstemperatur verbleiben. Nach Aushärten des Formteils 1 lässt sich, wie in Fig. 1 gezeigt, die Außenform 8 anheben und das Formteil 1 aus dem durch Innenform 7 und Außenform 8 gebildeten Formraum entnehmen. Innenform 7 und Außenform 8 können ausgestaltet sein, eine Flugzeugrumpfhälfte auszuformen, wie in Fig. 1 gezeigt, wobei es jedoch ebenso möglich ist, jegliche anderen Teile, beispielsweise ein Flugzeugflügel oder einen Flugzeugpropeller mittels des vorgeschlagenen Verfahrens sowie der Vorrichtung in besonders einfacher Weise auszuformen.

**Bezugszeichenliste**

| | |
|---|---|
| Bauteil, mit einer Matrix imprägnierte Faser | 1 |
| C-Gestell | 2 |
| Oberem C-Schenkel | 3 |
| Unteren C-Schenkel | 4 |
| C-Basis | 5 |
| Pressenrahmen | 6 |
| Innenform | 7 |
| Außenform | 8 |
| Pfeile | 9 |
| Pfeil | 10 |
| Trennmittel | 11 |
| Mantelfläche (der Innenform) | 12 |
| Trennfolie | 13 |
| Mantelfläche (der Außenform) | 14 |
| Trennmembran | 14a |
| Kavität | 15 |
| Thermoöltemperier- und Druckeinrichtung | 16 |
| Thermoöl bzw. temperierbares Druckfluid | 17 |
| Zuführkanal | 18 |
| Heiz- und/oder Kühlkanal | 19 |
| Vakumierkanal | 20 |
| Aussparung | 21 |
| Stringer | 22 |
| Aufdickung | 23 |
| Druckverlauf | 24 |
| Temperaturverlauf | 25 |
| Zeitachse | 26 |

## Patentansprüche

1. Verfahren zum Herstellen eines Bauteils (1) aus einem Faserverbundwerkstoff, mit den Schritten:
Einbringen einer mit einer Matrix imprägnierten Faser (1) auf die Innenform (7) eines zwischen der Innenform (7) und einer Außenform (8) gebildeten Formraums,
Einbringen einer Trennmembran (14a) auf die mit der Matrix imprägnierten Faser (1) derart, dass sich zwischen der Außenform (8) und der Trennmembran (14a) eine sich entlang der Mantelfläche (14) der Außenform (8) erstreckende Kavität (15) bildet,
Beaufschlagen der Kavität (15) mit einem Thermoöl (17) mit einem Druck größer Umgebungsdruck derart, dass das Thermoöl (17) mit dem Druck auf die Trennmembran (14a) einwirkt,
Erhitzen des Thermoöls (17) über eine Glasübergangstemperatur der Matrix, und
Abkühlen des Thermoöls (17) unter die Glasübergangstemperatur der Matrix, wobei
der Druck des Thermoöls (17) auf die Trennmembran (14a) wenigstens während des Abkühlens bis unter die Glasübergangstemperatur im Wesentlichen konstant gehalten wird, wobei ein im Wesentlich konstant gehaltener Druck bedeutet, dass sich der Druck in der Abkühlphase nicht um mehr als +/- 5% ändert.

2. Verfahren nach einem der vorhergehenden Ansprüche, wobei eine Heizrate beim Erhitzen des Thermoöls (17) größer als eine Kühlrate beim Kühlen des Thermoöls (17) ist.

3. Verfahren nach einem der vorhergehenden Ansprüche, mit dem Schritt:
Halten der Temperatur des Thermoöls (17) über der Glasübergangstemperatur der Matrix für wenigstens 10 Minuten, bevorzugt wenigstens 20 Minuten, weiter bevorzugt wenigstens 40 Minuten.

4. Verfahren nach einem der vorhergehenden Ansprüche, mit dem Schritt:
Erhitzen des Thermoöls (17) auf eine Temperatur ≥ 250 °C, ≥ 300 °C oder ≥ 400 °C, und Abkühlen des Thermoöls (17) auf eine Temperatur ≤ 80 °C, ≤ 100 °C, ≤ 150 °C, oder ≤ 200 °C.

5. Verfahren nach dem vorhergehenden Anspruch, mit dem Schritt:
Erhöhen des Drucks des Thermoöls (17) auf die Trennmembran (14a) ≥ 3 bar, ≥ 5 bar oder ≥ 10 bar vor, während und/oder nach dem Erhitzen über die Glasübergangstemperatur der Matrix.

6. Verfahren nach einem der vorhergehenden Ansprüche, mit dem Schritt:
Halten des Drucks des Thermoöls (17) auf die Trennmembran (14a) auf ≥ 3 bar, ≥ 5 bar oder ≥ 10 bar für wenigstens 80 Minuten, bevorzugt wenigstens 120 Minuten, weiter bevorzugt wenigstens 180 Minuten.

7. Verfahren nach dem vorhergehenden Anspruch, mit dem Schritt:
Verringern des Drucks des Thermoöls (17) auf die Trennmembran (14a) im Wesentlichen auf Umgebungsdruck nach dem Kühlen des Thermoöls (17) unter die Glasübergangstemperatur der Matrix.

8. Verfahren nach dem vorhergehenden Anspruch, wobei eine Druckerhöhungsrate beim Erhöhen des Drucks des Thermoöls (17) auf die Trennmembran (14a) im Wesentlichen einer Druckerniedrigungsrate beim Verringern des Drucks des Thermoöls (17) auf die Trennmembran (14a) entspricht.

9. Verfahren nach dem vorhergehenden Anspruch, wobei das Verfahren die Schritte Erhöhen des Drucks des Thermoöls (17), Verringern des Drucks des Thermoöls (17), Erhitzen des Thermoöls (17) und Abkühlen des Thermoöls (17) umfasst, wobei der Druck des Thermoöls (17) auf die Trennmembran (14a) unabhängig von der Temperatur des Thermoöls (17) verändert werden kann.

10. Verfahren nach einem der vorhergehenden Ansprüche, mit dem Schritt
Vorheizen der Außenform (8) und/oder der Innenform (7) auf eine Grundtemperatur, insbesondere vor dem Einbringen der mit der Matrix imprägnierten Faser (1), und/oder
Beaufschlagen der Mantelfläche (12) der Innenform (7) mit Unterdruck.

11. Verfahren nach einem der vorhergehenden Ansprüche, mit dem Schritt Einbringen eines Stringers (22), eines Spants und/oder einer Aufdickung (23) in eine Aussparung der Innenform (7), insbesondere vor dem Einbringen der mit der Matrix imprägnierten Faser (1).

12. Verfahren nach einem der vorhergehenden Ansprüche mit dem Schritt Kühlen der Innenform (7) auf eine Temperatur ≤ 150 °C, ≤ 200 °C oder ≤ 250 °C oder nach einem Verfahren nach dem vorhergehenden Anspruch mit dem Schritt Kühlen der Innenform (7) auf eine Temperatur ≤ 150 °C, ≤ 200 °C oder ≤ 250 °C im Bereich des Stringers (22), des Spants und/oder der Aufdickung (23).

13. Verfahren nach einem der vorhergehenden Ansprüche, mit einer die Innenform (7) und die Außenform (8) aufweisenden Presse, insbesondere einer C-Rahmenpresse (6), und/oder dem Schritt, nach dem Einbringen der Trennmembran (14a), Verspannen der Innenform (7) und der Außenform (8) gegeneinander, bis dass die Kavität (15) ausgebildet ist.

14. Verfahren nach einem der vorhergehenden Ansprüche, wobei die mit der Matrix imprägnierten Faser (1) eine vorkonsolidierte Halbzeugschale und/oder vorkonsolidierte Einzellagen umfasst.

15. Verfahren nach einem der vorhergehenden Ansprüche, mit einer die Innenform (7) und die Außenform (8) aufweisenden Presse, wobei die Innenform (7) und/oder die Au-ßenform (8) ausgebildet ist, ein Flugzeugbauteil, ein Schiffsbauteil oder ein Fahrzeugbauteil auszuformen.

## Claims

1. Method for producing a component (1) from a fiber composite material, comprising the steps:
introducing a fiber (1) impregnated with a matrix on the inner mold (7) of a mold space formed between the inner mold (7) and an outer mold (8);
introducing a separation membrane (14a) onto the fiber (1) impregnated with the matrix in such a way that a cavity (15) extending along the shell surface (14) of the outer mold (8) is formed between the outer mold (8) and the separation membrane (14a);
pressurizing the cavity (15) with thermal oil (17) at a pressure greater than ambient pressure in such a way that the thermal oil (17) acts on the separation membrane (14a) with the pressure;
heating the thermal oil (17) above a glass transition temperature of the matrix; and
cooling the thermal oil (17) below the glass transition temperature of the matrix, wherein
the pressure of the thermal oil (17) acting on the separation membrane (14a) is kept substantially constant at least during cooling to below the glass transition temperature, wherein a substantially constant pressure means that the pressure does not change by more than ±5% during the cooling phase.

2. Method according to the preceding claim, wherein a heating rate when heating the thermal oil (17) is greater than a cooling rate when cooling the thermal oil (17).

3. Method according to any one of the preceding claims, comprising the step:
maintaining the temperature of the thermal oil (17) above the glass transition temperature of the matrix for at least 10 minutes, preferably at least 20 minutes, more preferably at least 40 minutes.

4. Method according to any one of the preceding claims, comprising the step:
heating the thermal oil (17) to a temperature ≥ 250°C, ≥ 300°C or ≥ 400°C and cooling the thermal oil (17) to a temperature ≤ 80°C, ≤ 100°C, ≤ 150°C or ≤ 200°C.

5. Method according to the preceding claim, comprising the step:
increasing the pressure of the thermal oil (17) acting on the separation membrane (14a) to ≥ 3 bar, ≥ 5 bar or ≥ 10 bar before, during and/or after heating above the glass transition temperature of the matrix.

6. Method according to any one of the preceding claims, comprising the step:
maintaining the pressure of the thermal oil (17) acting on the separation membrane (14a) at ≥ 3 bar, ≥ 5 bar or ≥ 10 bar for at least 80 minutes, preferably at least 120 minutes, more preferably at least 180 minutes.

7. Method according to the preceding claim, comprising the step:
reducing the pressure of the thermal oil (17) acting on the separation membrane (14a) substantially to ambient pressure after cooling the thermal oil (17) below the glass transition temperature of the matrix.

8. Method according to the preceding claim, wherein a rate of pressure increase when increasing the pressure of the thermal oil (17) acting on the separation membrane (14a) is substantially corresponds to a rate of pressure decrease when decreasing the pressure of the thermal oil (17) acting on the separation membrane (14a).

9. Method according to the preceding claim, wherein the method comprises the steps of increasing the pressure of the thermal oil (17), decreasing the pressure of the thermal oil (17), heating the thermal oil (17) and cooling the thermal oil (17), wherein the pressure of the thermal oil (17) acting on the separation membrane (14a) can be changed independently of the temperature of the thermal oil (17).

10. Method according to any one of the preceding claims, comprising the step:
preheating the outer mold (8) and/or the inner mold (7) to a base temperature, in particular before introducing the fiber (1) impregnated with the matrix; and/or
applying negative pressure to the shell surface ( 12) of the inner mold (7).

11. Method according to any one of the preceding claims, comprising the step of introducing a stringer (22), a rib and/or a thickening (23) into a recess of the inner mold (7), in particular before introducing the fiber impregnated with the matrix.

12. Method according to any one of the preceding claims, comprising the step of cooling the inner mold (7) to a temperature ≤ 150°C, ≤ 200°C or ≤ 250°C, or according to a method according to the preceding claim comprising the step of cooling the inner mold (7) to a temperature ≤ 150°C, ≤ 200°C, or ≤ 250°C in the region of the stringer (22), the rib and/or the thickening (23).

13. Method according to any one of the preceding claims, comprising a press which comprises the inner mold (7) and the outer mold (8), in particular a C-frame press (6), and/or the step, after introducing the separation membrane (14a), of bracing the inner mold (7) and the outer mold (8) against one another until the cavity (15) is formed.

14. Method according to any one of the preceding claims, wherein the fiber (1) impregnated with the matrix comprises a pre-consolidated shell of a semifinished product and/or pre-consolidated individual layers.

15. Method according to any one of the preceding claims, comprising a press which comprises the inner mold (7) and the outer mold (8), wherein the inner mold (7) and/or the outer mold (8) are adapted to form an aircraft component, a ship component or a vehicle component.

## Revendications

1. Procédé de fabrication d'une pièce (1) à base d'un matériau composite fibreux, avec les étapes :
d'incorporation d'une fibre (1) imprégnée avec une matrice sur l'intérieur de moule (7) d'un espace de moulage formé entre l'intérieur de moule (7) et un extérieur de moule (8),
d'incorporation d'une membrane de séparation (14a) sur la fibre (1) imprégnée avec la matrice de sorte qu'une cavité (15) s'étendant le long de la surface d'enveloppe (14) de l'extérieur de moule (8) se forme entre l'extérieur de moule (8) et la membrane de séparation (14a),
de soumission de la cavité (15) pourvue d'une huile thermique (17) à une pression supérieure à la pression environnante de telle sorte que l'huile thermique (17) agisse sur la membrane de séparation (14a) avec la pression,
de chauffage de l'huile thermique (17) au-dessus d'une température de transition vitreuse de la matrice, et
de refroidissement de l'huile thermique (17) en-dessous de la température de transition vitreuse de la matrice,
dans lequel
la pression de l'huile thermique (17) sur la membrane de séparation (14a) est maintenue essentiellement constante au moins pendant le refroidissement jusqu'en dessous de la température de transition vitreuse, où une pression maintenue essentiellement constante signifie que la pression ne se modifie pas de plus de +/- 5 % dans la phase de refroidissement.

2. Procédé selon l'une des revendications précédentes, dans lequel une vitesse de chauffage lors du réchauffage de l'huile thermique (17) est supérieure à une vitesse de refroidissement lors du refroidissement de l'huile thermique (17).

3. Procédé selon l'une des revendications précédentes, avec l'étape :
de maintien de la température de l'huile thermique (17) au-dessus de la température de transition vitreuse de la matrice pour au moins 10 minutes, de préférence au moins 20 minutes, plus préférentiellement au moins 40 minutes.

4. Procédé selon l'une des revendications précédentes, avec l'étape :
de chauffage de l'huile thermique (17) à une température ≥ 250 °C, ≥ 300 °C ou ≥ 400 °C, et de refroidissement de l'huile thermique (17) à une température ≤ 80 °C, ≤ 100 °C, ≤ 150 °C ou ≤ 200 °C.

5. Procédé selon l'une des revendications précédentes, avec l'étape :
d'augmentation de la pression de l'huile thermique (17) sur la membrane de séparation (14a) à ≥ 3 bar, ≥ 5 bar ou ≥ 10 bar, avant, pendant et/ou après le chauffage au-dessus de la température de transition vitreuse de la matrice.

6. Procédé selon l'une des revendications précédentes, avec l'étape :
de maintien de la pression de l'huile thermique (17) sur la membrane de séparation (14a) à ≥ 3 bar, ≥ 5 bar ou ≥ 10 bar pour au moins 80 minutes, de préférence au moins 120 minutes, plus préférentiellement au moins 180 minutes.

7. Procédé selon la revendication précédente, avec l'étape :
de diminution de la pression de l'huile thermique (17) sur la membrane de séparation (14a) essentiellement sur la pression environnementale après le refroidissement de l'huile thermique (17) en-dessous de la température de transition vitreuse de la matrice.

8. Procédé selon la revendication précédente, dans lequel un taux d'augmentation de la pression lors de l'augmentation de la pression de l'huile thermique (17) sur la membrane de séparation (14a) correspond essentiellement à un taux de diminution de la pression lors de la diminution de la pression de l'huile thermique (17) sur la membrane de séparation (14a).

9. Procédé selon la revendication précédente, où le procédé comprend les étapes d'augmentation de la pression de l'huile thermique (17), de diminution de la pression de l'huile thermique (17), de chauffage de l'huile thermique (17) et de refroidissement de l'huile thermique (17), où la pression de l'huile thermique (17) sur la membrane de séparation (14a) peut être modifiée de manière indépendante de la température de l'huile thermique (17).

10. Procédé selon l'une des revendications précédentes, avec l'étape
de préchauffage de l'extérieur de moule (8) et/ou de l'intérieur de moule (7) jusqu'à une température de base, en particulier, avant l'incorporation de la fibre (1) imprégnée avec la matrice, et/ou
de soumission de la surface d'enveloppe (12) de l'intérieur de moule (7) à une dépression.

11. Procédé selon l'une des revendications précédentes, avec l'étape d'incorporation d'un raidisseur (22), d'une membrure, et/ou d'un épaississement (23), dans un renfoncement de l'intérieur de moule (7), en particulier avant l'incorporation de la fibre (1) imprégnée avec la matrice.

12. Procédé selon l'une des revendications précédentes, avec l'étape de refroidissement de l'intérieur de moule (7) à une température ≤ 150 °C, ≤ 200 °C ou ≤ 250 °C ou d'après un procédé selon la revendication précédente avec l'étape de refroidissement de l'intérieur de moule (7) à une température ≤ 150 °C, ≤ 200 °C ou ≤ 250 °C dans la zone du raidisseur (22), de la membrure, et/ou de l'épaississement (23).

13. Procédé selon l'une des revendications précédentes, avec une presse présentant l'intérieur de moule (7) et l'extérieur de moule (8), notamment une presse à cadre en C (6), et/ou avec l'étape, après l'incorporation de la membrane de séparation (14a), de contraction de l'intérieur de moule (7) et de l'extérieur de moule (8) l'un contre l'autre jusqu'à ce que la cavité (15) soit formée.

14. Procédé selon l'une des revendications précédentes, dans lequel la fibre (1) imprégnée avec la matrice comprend une coque de semi-produit pré-consolidée et/ou des couches individuelles pré-consolidées.

15. Procédé selon l'une des revendications précédentes, avec une presse présentant l'intérieur de moule (7) et l'extérieur de moule (8), dans lequel l'intérieur de moule (7) et/ou l'extérieur de moule (8) sont conçus pour façonner une pièce d'avion, une pièce de bateau ou une pièce de véhicule.
